(19)

Europäisches Patentamt
European Patent Office
Office européen des brevets

(11) **EP 2 256 632 B1**

(12) **EUROPEAN PATENT SPECIFICATION**

(45) Date of publication and mention
of the grant of the patent:
**31.07.2013 Bulletin 2013/31**

(51) Int Cl.:
***G06F 9/48*** (2006.01) ***G06F 9/50*** (2006.01)

(21) Application number: **09161071.7**

(22) Date of filing: **26.05.2009**

(54) **Multi-processor scheduling**

Multiprozessor-Scheduling

Ordonnancement multiprocesseurs

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**01.12.2010 Bulletin 2010/48**

(73) Proprietor: **Telefonaktiebolaget L M Ericsson (publ)**
**164 83 Stockholm (SE)**

(72) Inventor: **Carlsson, Anders**
**222 40 Lund (SE)**

(74) Representative: **Valea AB**
**Anna Lindhs Plats 4**
**211 19 Malmö (SE)**

(56) References cited:
- **LIGANG HE ET AL: "Dynamic Scheduling of Parallel Jobs with QoS Demands in Multiclusters and Grids" GRID COMPUTING, 2004. PROCEEDINGS. FIFTH IEEE/ACM INTERNATIONAL WORKSH OP ON PITTSBURGH, PA, USA 08-08 NOV. 2004, PISCATAWAY, NJ, USA,IEEE, 8 November 2004 (2004-11-08), pages 402-409, XP010769526 ISBN: 978-0-7695-2256-2**
- **YUE, J.: "Global Backfilling Scheduling in Multiclusters" LECTURE NOTES IN COMPUTER SCIENCE LNCS3285, 2004, pages 232-239, XP002541638 Springer Berlin / Heidelberg Retrieved from the Internet: URL:http://www.springerlink.com/content/t2 r9r3a68heq5nnv/fulltext.pdf> [retrieved on 2009-08-07]**
- **BLAKE B A ET AL: "EXPERIMENTAL EVALUATION OF A REAL-TIME SCHEDULER FOR A MULTIPROCESSOR SYSTEM" IEEE TRANSACTIONS ON SOFTWARE ENGINEERING, IEEE SERVICE CENTER, LOS ALAMITOS, CA, US, vol. 17, no. 1, 1 January 1991 (1991-01-01), pages 34-44, XP000220349 ISSN: 0098-5589**
- **LIGANG HE ET AL: "Dynamic scheduling of parallel real-time jobs by modelling spare capabilities in heterogeneous clusters" CLUSTER COMPUTING, 2003. PROCEEDINGS. 2003 IEEE INTERNATIONAL CONFEREN CE ON DEC. 1-4, 2003, PISCATAWAY, NJ, USA,IEEE, 1 December 2003 (2003-12-01), pages 2-10, XP010674384 ISBN: 978-0-7695-2066-7**

## Description

**Technical field**

The present invention relates to scheduling of processing jobs in a system having a plurality of processing units.

**Background**

Scheduling of software tasks has been extensively researched for over forty years, and continues to be a topic of intense research and development. One reason is that there is never one ideal schedule. Nevertheless, scheduling of tasks onto a single processor is very well known, and well known heuristics are proven optimal for real-time tasks on a single processor.

Scheduling tasks onto a group of processors is less explored. The added dimension of multiple processors gives rise to several approaches to manage the added complexity. Examples of basic approaches include:

*Global scheduling, full migration.* In this approach there is a single queue for all processors (global scheduling) and full migration, i.e. processors can at any time interrupt a job for a higher priority job, letting the interrupted job be handled later by another processor.

*Global scheduling, limited migration.* In this approach there is also a single queue for all processors. Once a job is taken up by a processor, it is completed without interruption by the same processor.

*Partitioned, local scheduling.* In this approach, there is a separate queue for each processor. Jobs of a certain type always arrive to a certain queue.

*Two-level, or hybrid, scheduling.* In this approach there is a global queue for all processors. Jobs are distributed from the global queue to local queues for each processor.

For real distributed or multi-core systems, it is also necessary to consider the impact of dispatch delays, memory system performance and interconnect structure. These add non-trivial performance impediments to a multi-processor system.

Considering global scheduling with full migration, it is well known that processing jobs in order of ascending deadlines, "Earliest Deadline First" (EDF), is not optimal for the multiprocessor. There exist task sets that approach zero global utilization, while still not being schedulable by EDF. Further, the use of EDF with full migration may cause an average of one migration per job. If the number of processors is large, the number of scheduler invocations may also overwhelm a single node, despite EDF being a simple algorithm.

A popular algorithm for global multi-core scheduling is "Least Laxity First" (LLF), which has better properties than EDF. For one, it is able to utilize half the aggregated capacity for real-time tasks. However, like EDF, LLF also causes a large amount of migrations and scheduler invocations. Further, the computational complexity of LLF is slightly higher than that of the EDF approach.

To be able to further increase the utilization available to real-time processing, it is feasible to use one of the optimal multi-core schedulers, either the "Proportionate Fair (Pfair) algorithm or "Largest Local Remaining Execution time First" (LLREF). The PFair algorithm, however, causes an even higher amount of migrations than EDF. Although LLREF yields a lower amount of scheduler invocations and fewer migrations, LLREF needs to know when the next job to be released will be released. For this reason LLREF can be considered an algorithm that is not very suitable for real-time processing.

Global scheduling algorithms like FP, EDF, LLF, PFair, etc. may be academically interesting, but fail when applied to a real system with delays and limited memory system performance. With increasing load, these schedulers cause an increasing amount of job migrations. Since job migrations imply a load increase, the migration frequency will increase further. Under certain conditions, particularly near some practical utilization limit, the load increase from migrations accelerates, leading to an unstable load which quickly renders the entire system useless.

An example of prior art scheduling in a multicore processor system is described in US patent application publication 2007/0220517. However, the scheduling described here is associated with the respective drawbacks of high migration rates and, in case of using EDF, low real-time utilization. The hysteresis scheduling mode described in US 2007/0220517 may improve throughput, but also increases response-times which limits its utility for hard real-time applications.

The following document describes a two-level real-time (Quality of Service/QoS) scheduler structure in multiclusters and grids.

LIGANG HE ET AL: "Dynamic Scheduling of Parallel Jobs with QoS Demands in Multiclusters and Grids" GRID COMPUTING, 2004. PROCEEDINGS. FIFTH IEEE/ACM INTERNATIONAL WORKSHOP ON PITTSBURGH, PA, USA 08-08 NOV. 2004, PISCATAWAY, NJ, USA, IEEE, 8 November 2004 (2004-11-08), pages 402-409, XPO10769526

The particular aspect of recall and redistribution of jobs queued for busy processors to idle processors is a well-known strategy ("job/work stealing"), as can be found for example in the following document:

YUE, J.: "Global Backfilling Scheduling in Multiclusters" LECTURE NOTES IN COMPUTER SCIENCE LNCS3285, 2004, pages 232-239, XP002541638

## Summary

The invention is defined in independent method claims 1 and 2, and corresponding device claim 17 and a corresponding claim 18 for a computer program.

Hence, in order to improve on prior art solutions there is provided, according to a first aspect, a method of scheduling processing jobs in a multi-processor computing apparatus. The jobs are associated with at least one respective deadline. The method involves communication between a global job scheduling function and a plurality of local job scheduling functions, each local job scheduling function being associated with a respective processor. The method comprises maintaining, in the global job scheduling function, updated status information regarding any idle processor, points in time when any processor is expected to be idle, and laxity values associated with any processor. Furthermore, the method comprises scheduling, in the global job scheduling function, jobs by dispatching jobs to the local job scheduling functions and the dispatching is conditioned on the status information. Jobs are recalled from the local job scheduling functions at any non-idle processor and any recalled job is dispatched to a local job scheduling function at an idle processor. Interrupted jobs are received from the local job scheduling functions, and any received interrupted job is dispatched to a local job scheduling function, the dispatching being conditioned on the status information.

In other words, jobs are interrupted and returned to the global job scheduling function if a processor cannot finish the job, processors keep working on the current task for as long as possible, until it is necessary to switch in order to meet the deadline of another job, and processors becoming idle can start working on jobs in queue at other processors. This approach is a combination of concepts. Global list scheduling where a global job scheduling function assigns jobs to the "least busy" node; a local scheduling with "run current job to completion" policy. The currently executed job is interrupted only if necessary to meet other deadlines; and global "job stealing", i.e. if, when a processor becomes idle, there are more jobs than busy processors, a job is moved from the most busy processor with more than one job to the idle processor.

The global dispatcher has low complexity and is basically invoked only when needed, i.e. when new processing jobs arrive. This improves scalability, so that larger processor arrays can be globally scheduled.

It has been found that, by applying such scheduling in a multiprocessor environment, the overall number of job migrations is 5-10 times less than when global EDF and global LLF scheduling is applied. This leads, for example, to better utilization in the face of long bus delays.

The fact that each processor is associated with its own local scheduler allows for a combination of global and partitioned approaches. The local scheduler reports its current commitment to the global job scheduling function, which then automatically can decide whether to assign jobs or not.

It is estimated that the maximum possible real-time utilization of a processor array may be raised from slightly above half the capacity to near full capacity. This in turn may enable a considerable reduction of installed capacity in processing systems in which the scheduling is realized, such as mobile communication platform systems, cellular modems and base stations in mobile communication systems, leading to lower manufacturing costs, alternately, longer lifetime of equipment leading to lower cost.

Embodiments include those where the maintaining of updated status information comprises receiving, from each local job scheduling function, a respective calculated schedule laxity value being a minimum difference between finishing deadlines for jobs and expected job completion times associated with jobs currently dispatched to each respective processor, and where the scheduling of a job comprises checking whether an idle processor exists. If an idle processor exists, the job is dispatched to the local job scheduling function of the idle processor, otherwise an expected completion time of the job is calculated, the calculation relating to a situation involving the existence of an idle processor, a job laxity value is calculated as a difference between the deadline for the job and the calculated expected completion time for the job, a check is made whether the calculated job laxity is greater than a difference between the earliest point in time when any processor is expected to be idle and the current time. If so, the job is dispatched to the local job scheduling function of that processor, otherwise the job is dispatched to the local job scheduling function of the processor having the largest schedule laxity value.

Other embodiments include those where the maintaining of updated status information comprises receiving, from each local job scheduling function, a respective calculated schedule laxity value being a minimum difference between finishing deadlines for jobs and expected job completion times associated with jobs currently dispatched to each respective processor, and where the scheduling of a job comprises checking whether an idle processor exists. If an idle processor exists, the job is dispatched to the local job scheduling function of the idle processor, otherwise a check is made whether a starting deadline for the job is later than the earliest point in time when any processor is expected to be idle and, if so, the job is dispatched to the local job scheduling function of that processor. If a starting deadline for the job is not later than the earliest point in time when any processor is expected to be idle, the job is dispatched to the local job scheduling function of the processor having the largest schedule laxity value.

That is, instead of a finish deadline, jobs may have an associated starting deadline, which can be directly compared to the schedule completion times of processors without the intermediate calculation of laxity, which may simplify the implementation.

Embodiments include those that comprise, in the global job scheduling function, determining from the updated status information whether at least one processor is idle and, if so, determining recall decision data comprising information regarding the total number of jobs that currently are dispatched to the local job scheduling functions, the number of non-idle processors, and information regarding which of the processors is the busiest. Then it is decided, using the recall decision data, whether to recall a job from the busiest processor and, if so, a recall request is sent to the busiest processor, a job is received from the busiest processor, and the received job is dispatched to the local job scheduling function of an idle processor.

In such embodiments involving recall requests, a local job scheduling function may perform reception of a job recall request from the global job scheduling function, estimation of whether queued jobs can meet their respective finishing deadlines if processed by any processor, and, depending on the estimation returning a job to the global job scheduling function.

Recalling of jobs, or "job stealing", makes this combined two-level scheduling work-conserving. That is, as long as there are at least as many jobs as processors, no processor is left idle, leading to shorter schedule lengths, which also increases the possible utilization. Job stealing can be seen as the correction of a decision by the global job scheduling function.

Moreover, in such embodiments, a local job scheduling function may perform determination of return selection criteria for deciding which job to return to the global job scheduling function. The determination of return selection criteria may comprise any of a job last in a queue of jobs, calculating re-dispatch delay values for queued jobs and comparing the re-dispatch delay values with laxity values of the queued jobs, calculating re-dispatch delay values for queued jobs and determining a respective starting time, taking account of the re-dispatch delay values, at any processor and comparing these starting times, and following the determination of the return selection criteria returning a job to the global job scheduling function according to the return selection criteria.

This ensures that jobs are returned only if it is estimated that they can meet their deadlines, taking into account delays between decisions by the global job scheduling function and reaction to the decisions by the local job scheduling functions, and vice versa.

Embodiments include those that comprise, in a local job scheduling function, checking whether the schedule laxity is less than zero and, if so calculating an expiration time point being the point in time at which a currently running job must stop running in order for the schedule laxity to be zero, interrupting the currently running job, the interruption taking place at a non-zero time interval before the expiration time point, returning the interrupted job to the global job scheduling function, activating a queued job, and recalculating the schedule laxity.

In other words, if the schedule laxity is found to be negative, the local job scheduling function sets up a timer to expire at latest when it is necessary to start execution of the job first in queue for the schedule laxity to become zero. When the timer expires, the current job is returned to the global job scheduling function and the first job in the queue is activated.

By allowing overcommitted processors to cut off, i.e. interrupt, a job enables load sharing over the processor group, increasing the possible utilization for real-time processing. This also solves the problem of job splitting, a key element of optimal real-time scheduling algorithms.

In such embodiments involving negative schedule laxity, the non-zero time interval may be determined by calculating the laxity of the currently running job, calculating a an assumption laxity for each queued job, as the difference between an expected completion time and a finishing deadline relative to a common assumed starting point in time, and identifying the smallest assumption laxity among the queued jobs. The non-zero time interval is set, in case the laxity of the currently running job is greater than the identified smallest assumption laxity, to a first timer interval value, and otherwise the non-zero time interval is set to a second timer interval value, the second timer interval value being longer than the first timer interval value.

Alternatively, in embodiments involving negative schedule laxity, the non-zero time interval may be determined by calculating the laxity of the currently running job, calculating a an assumption laxity for each queued job, as the difference between an expected completion time and a finishing deadline relative to a common assumed starting point in time, identifying the smallest assumption laxity among the queued jobs. The non-zero time interval is set to a value that is proportional to the difference between the laxity of the currently running job and the smallest assumption laxity and inversely proportional to the sum of the laxity of the currently running job and the smallest assumption laxity.

This provides an advantageous effect in that a current job with great laxity is suspended as soon as possible if a job with considerably less laxity is on queue, while at the same time taking into account the fact that it is desirable that a current job with little laxity makes as much progress as possible before being interrupted.

Moreover, such embodiments improve the ability to counteract the fact that the timer expiration should occur such that at least some progress is made on the current job before it is returned to the global scheduling function. Allowing immediate expiration can lead to jobs rotating infinitely between a local job scheduling function and the global job scheduling function without ever being worked on, eventually missing its deadline. In other words, such embodiments improve the ability to schedule heavy workloads over the single-value rules typically used in prior art solutions.

Furthermore, embodiments involving negative schedule laxity may comprise, in a local job scheduling function, receiving a job recall request from the global job scheduling function, estimating whether queued jobs can meet their respective finishing deadlines taking account of any delay caused by saving and restoring data associated with re-scheduling between processors, and, depending on the estimation, returning a job to the global job scheduling function.

Such embodiments address problems related to the delays involved during job migration. That is, the sometimes significant amount of time (thousands of clock cycles) spent when saving the state of one job from one processor to a common memory area, followed by the reloading to another processor from the same common memory area.

Embodiments include those that comprise, in a local job scheduling function, checking whether the schedule laxity is less than zero and, if so, calculating an expiration time point being the point in time at which a currently running job must stop running in order for the schedule laxity to be zero, calculating an assumption schedule laxity given the assumption that the currently running job is rescheduled. If the calculated difference is positive, the currently running job is interrupted at a non-zero time interval before the expiration time point, and otherwise the currently running job is interrupted immediately. A queued job is then activated and the schedule laxity is recalculated.

Such embodiments deals with the situation involving jobs that are statically assigned to one processor. Such static jobs become part of a processor's commitment and are used in calculation of busy period and laxity. However, since they are statically assigned, they cannot be passed to the global job scheduling function when interrupted and cannot be handed over to the global job scheduling function if another processor is idle.

Embodiments include those that comprise, in a local job scheduling function, assigning a priority level to each job, maintaining a plurality of job queues, each queue containing jobs having a single priority level, and maintaining, in the global job scheduling function, updated status information regarding the plurality of queues.

By adding the concept of priority, such embodiments will be able to improve the capability of the scheduling process to differentiate between jobs in terms of which jobs are more critical, e.g. in terms of missing a deadline, and which jobs that are less critical.

Embodiments include those where the global job scheduling function is associated with a specific processor and those where the global job scheduling function is associated with a plurality of processors.

Such embodiments will enable a more flexible implementation of the scheduling.

Embodiments include those where the maintaining of updated status information comprises maintaining a list of processors sorted in order of ascending points in time when the processors are expected to be idle, and maintaining a list of processors sorted in order of descending laxity. The maintaining of updated status information may further comprise maintaining a first-in-first-out list of idle processors.

Such embodiments will enable a more simplified implementation of the scheduling.

In a second aspect, there is provided a computer program that comprises software instructions that, when executed in a processing device, performs the method according to the first aspect.

In a third aspect there is provided a processing device comprising processing and memory means configured to perform the method as summarized above, and in a fourth aspect there is provided a communication device that comprises such a processing device.

These further aspects provide corresponding effects and advantages as discussed above in connection with the first aspect.

**Brief description of the drawings**

Embodiments will now be described with reference to the attached drawings, where:

figure 1 schematically illustrates interacting scheduling entities,
figure 2 schematically illustrates interacting scheduling entities,
figure 3 schematically illustrates a processing platform,
figures 4a and 4b are flowcharts of scheduling,
figure 5 is a processor schedule,
figure 6 is a processor schedule,
figures 7a to 7c are flowcharts of scheduling, and
figures 8a to 8e are flowcharts of scheduling.

## Detailed description of embodiments

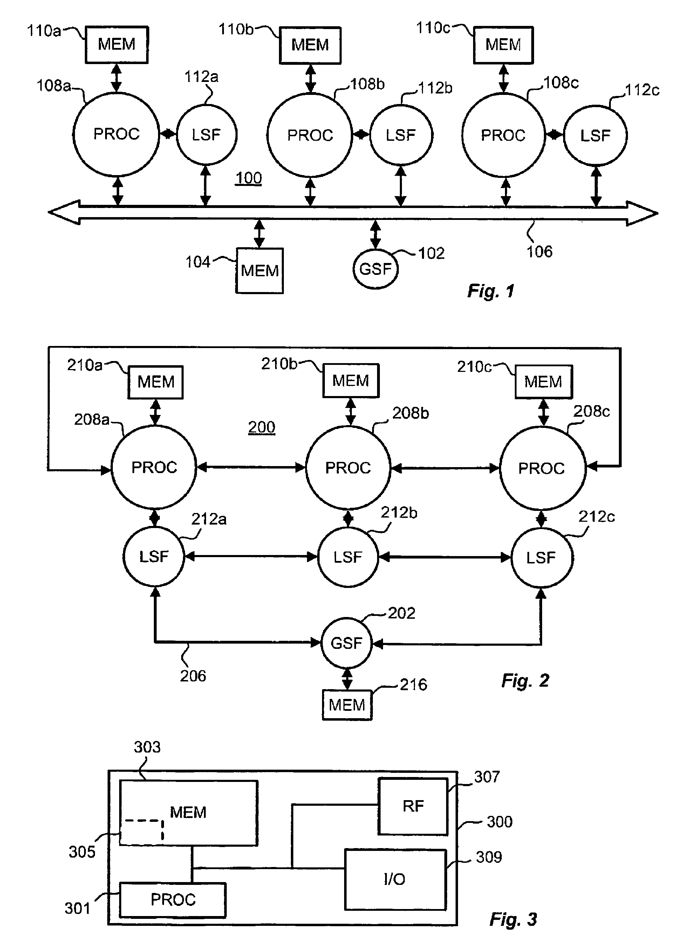

Figure 1 illustrates schematically a processing system 100 comprising a number of interacting entities. The entities are described in functional terms and comprise both hardware units as well as software units. As the skilled person will realize, implementations of the system 100 may differ in terms of which and how much functionality of each entity is realized by hardware as well as which and how much functionality is realized in software. An example implementation will be briefly described below in connection with figure 3.

Three processing units 108a-c, e.g. individual processors or processor cores, each having a respective local memory 110a-c, are connected to an interconnecting bus 106. A global memory 104 is also connected to the bus 106. Each processing unit 108a-c is in connection with a respective local job scheduling function 112a-c. A global job scheduling function 102 is in connection with the local job scheduling functions 112a-c and the global memory 104 via the bus 106. The global job scheduling function 102 may be realized by software running in any one or more of the processing units 108a-c. That is, the global job scheduling function 102 may be centralized as well as decentralized.

As will be described in detail below, the global job scheduling function 102 and the local job scheduling functions 112a-c communicate with each other by way of algorithms that utilizes data stored in the different memory units 104, 110a-c. In the following, it is assumed that processing jobs are entities that are defined sets of instructions and parameters that are created by software applications or an operating system running in one or more of the processors 108a-c.

The data and parameters that will be discussed in the following include lists and queues. These are stored, as the skilled person will realize, in the memory units 104, 110a-c in appropriate manners according to each specific situation. For example, the global job scheduling function 102 refers to lists of processors and a global dispatch queue. These are typically maintained in the global memory 104. The local job scheduling functions 110a-c have local dispatch queues that typically are maintained in the local memories 110a-c.

Figure 2 illustrates a system 200 similar to the system 100 of figure 1. However, instead of having an interconnecting bus (106 in figure 1), the system 200 is of a type that has a ring bus topology. Specifically, this entails that processing units 208a-c, each with local memory 210a-c and respective local job scheduling functions 212a-c are connected in a ring bus 206 fashion. A global job scheduling function 202 with a local memory 216 is in communication with the local job scheduling functions 212a-c. This is to illustrate that scheduling as described herein may be realized also in a topology in which delays in the communication between the global job scheduling function and local job scheduling functions are very different from the communication delays experienced in a bus topology such as the one in figure 1.

Figure 3 is a functional block diagram that schematically illustrates a processing platform that forms all or part of a mobile communication arrangement 300. The arrangement 300 comprises a processor 301, a memory 303, radio frequency circuitry 307 and an I/O unit 309 that represents a collection of input/output units such as a display, keypad, microphone and a loud speaker.

The system 100 of figure 1 and the system 200 of figure 2 may be implemented in the arrangement 300. In such embodiments, the global job scheduling functions 102, 202, the local job scheduling functions 112, 212 and the local memory 110, 210, 216 are all forming a part 305 of the memory 303 and the processing units 108, 208 may be in the form of different processor cores of the processing unit 301.

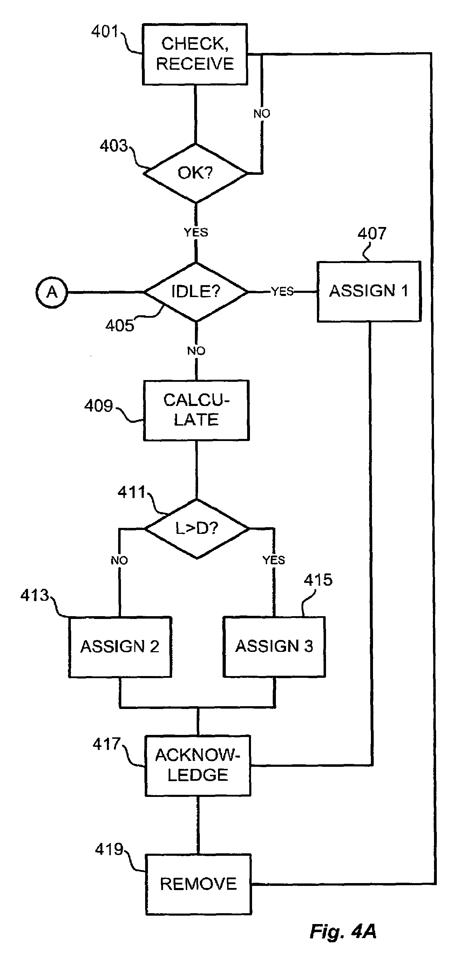

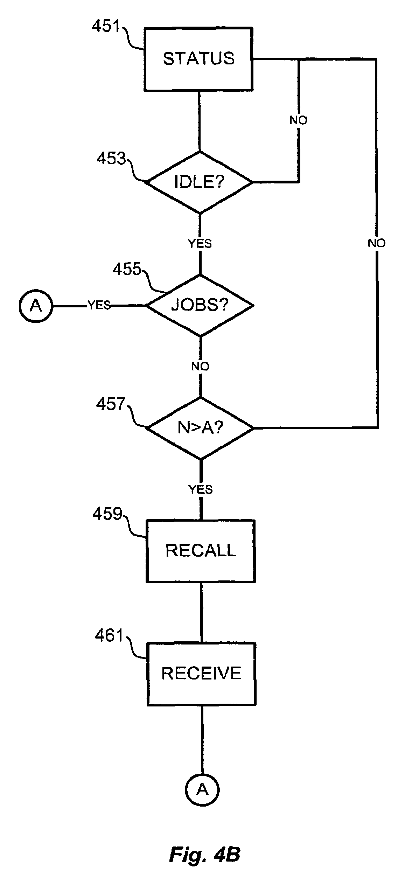

Referring now to also to figures 4 to 6, scheduling of processing jobs will be described by means of flow charts of methods or algorithms and corresponding illustrations of processor schedules. Entities involved in the scheduling to be described may be those exemplified above in connection with figures 1 and 2 and implemented in an arrangement such as the processing platform 300 of figure 3. It should be noted, however, that the scheduling may be realized in any suitable system, with or without shared memory, in any topology such as ring, grid, switch, and all-to-all, in any data sharing topology such as SMMP, NWOP, NUMA, and cached. The scheduling may be realized in any system having any number of processors, common memory, shared bus and systems having a separate dispatcher as global job scheduling function.

From a global point of view, jobs are assigned to the least busy processor. The global job scheduling function 102,202 may keep three lists of schedulable nodes, i.e. processors: a first list in the form of a First-in-First-Out (FIFO) list of idle processors, a second list in the form of a list of processors sorted in order of ascending schedule completion time. The schedule completion time is the time when the processor is expected to become idle. A third list is in the form of a list of processors sorted in order of descending schedule laxity. The schedule laxity is the minimum of the difference between job deadlines and expected job completion times, taken over all jobs currently assigned to the processor.

An equivalent, less complex implementation is to use two lists of schedulable processors instead of three lists. That is, a first list of processors in order of ascending completion time and a second list of processors in order of descending laxity. The completion time of idle processors will then be in past time. The laxity of an idle processor would be infinity. The ordering of processors will in such an implementation automatically become equal to the FIFO order in the implementations using three lists. However, when the completion time of a processor is in past time, current time must be used when estimating completion time of a job on an idle processor.

With specific reference to the flowchart in figure 4A, scheduling by the global job scheduling function 102, 202 will be described.

When a new job is received in a reception step 401, the job is placed in the dispatch queue. During this step 401 updated schedule laxity and completion times, received from the local job scheduling functions 112, 212, are available to the global job scheduling function 102, 202. At the arrival of the new job, checking is performed whether queued jobs can be dispatched or not. The condition for this is either of the following: the list of idle processors is non-empty, the lists of processors in ascending completion time and descending laxity contain valid information for a majority of processors. A decision is made in a decision step 403 such that, if none of the above conditions are met, the global job scheduling function stops and waits for status updates from the local job scheduling functions 112, 212, or receives more jobs.

If jobs can be dispatched, the global job scheduling function 102, 202 first tries to assign the job to an idle processor. This is performed by way of a checking step 405. If there exists an idle processor, the job is assigned to this processor in an assign step 407 and flow is continued in a receive acknowledgement step 417, as will be described in more detail below.

If it is found in the checking step 405 that no processors are idle, the global job scheduling function 102, 202 calculates, in a calculation step 409, the expected completion time of the job on any of the processors 108, 208, had there been an idle processor, and the difference between the job deadline and the expected completion time, i.e. the maximum job laxity. Then, as decided in a decision step 411, if the job laxity is greater than the difference between the completion time of the first completing processor and the current time, the job is assigned to that processor in an assign step 413. Otherwise, the job is assigned and sent to the processor with the largest schedule laxity in an assign step 415.

The processor acknowledges the assignment, along with updated schedule laxity and completion times as illustrated by the receive acknowledgement step 417. The processor is then removed from the lists in a removal step 419 until a status update is received as illustrated by a return of flow to the reception step 401.

Turning now to the flow chart in figure 4B, handling of job recalls will be described. When a processor 108, 208 reports a status that indicates that the processor has become idle, the global job scheduling function 102, 202 places the processor in the list of idle processors, as illustrated by a receive status step 451 and a check idle step 453. If there are jobs in the dispatch queue, these are dispatched, as illustrated by a check jobs step 455, in steps 405 to 419.

Otherwise, if there are no jobs left in the dispatch queue, if there are more dispatched jobs than currently active processors, as checked in a checking step 457, the dispatcher issues a job recall message to the busiest processor with at least one job on queue, i.e. one currently executing job and at least one waiting job, as illustrated by a recall job step 459. If, in the checking step 457, it is not found that there are more dispatched jobs than currently active processors, flow returns to the receive status step 451.

A processor is expected to respond to a recall message by returning one job back to the dispatcher, as indicated by a receive job step 461, which in turn will dispatch the received job to the idle processor as described in steps 405 to 407. Which job, out of several queued at the processor, to return is decided by the local job scheduling function at the processor, but the returned job is expected to have sufficient remaining laxity that the dispatch delays does not cause a deadline miss.

A variation of the scheduling performed by the global job scheduling function as described above is one where, instead of using finish deadlines associated with jobs, using a start deadline for the jobs. A feature of using a start deadline is that a start deadline can be directly compared to the schedule completion times of processors without the intermediate calculation of laxity. This enables a less complex implementation, i.e. a less complex implementation of at least the calculation step 409.

Although the embodiment described above may implicitly assume a single physical entity managing the global job scheduling function, the operation of the global job scheduling function can also be implemented such that all participants in a processor group share the workload of performing the global job scheduling function. In such embodiments, the (two or three) lists of information and the dispatch queue are located in memory that is shared, or at least accessible, by all processors. When a job is issued from one processor, e.g. a job pertaining to an operating system task, the processor attempts to dispatch the job itself, by first locking the dispatch queue, inserting the job in the dispatch queue and locking the lists. Then checking conditions for dispatching, dispatching and removal of the dispatch target from lists is performed in the manner described above in connection with figure 4A and figure 4B. This is then followed by unlocking the lists and unlocking the dispatch queue.

While the above description is mainly concerned with the global job scheduling function, the description to follow will focus mainly on the processing performed by the processors 108, 208 as controlled by their respective local job scheduling functions 112, 212. The local job scheduling function of each processor controls the basic execution order of the assigned jobs according to any suitable single-processor scheduling algorithm. When a job is assigned to the processor, it is placed in a local job queue. If the processor was idle immediately prior to the reception of the job, the assigned job is activated, i.e. removed from the local queue to the current job position.

The local job scheduling function 112, 212 then calculates expected job completion times and the difference between the job deadline and completion times. The minimum difference (i.e. the schedule laxity) and the final completion time are reported back to the dispatcher, where they are received in the reception step 401 (figure 4A).

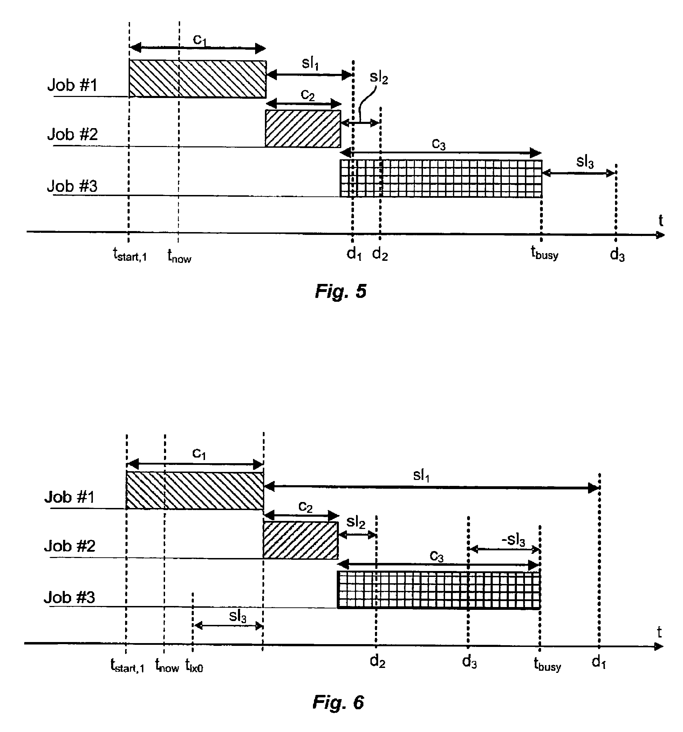

Figure 5 illustrates a processor schedule having a currently running job, denoted #1, which started at $t_{start,1}$. The current time is denoted $t_{now}$. Two jobs, #2 and #3, are waiting in queue to be processed. Each job is associated with a respective completion time denoted $c_1$, $c_2$ and $c_3$. The final completion time is denoted $t_{busy}$ and is calculated as $t_{busy} = t_{start,1} + sum\{c_1,c_2,c_3\}$. The laxity of the jobs are denoted by $sl_1$, $sl_2$ and $sl_3$, respectively, and are defined as the difference between the job finish deadline, $d_1$, $d_2$ and $d_3$, respectively, and the job completion time. The laxity associated with the schedule as a whole, i.e. the schedule laxity, is then defined by $sl = min\{sl_1,sl_2,sl_3\}$.

If the schedule laxity is found to be negative, the local scheduling function sets up a timer to expire at latest when it is necessary to start execution of the job first in queue for the schedule laxity to become zero. This time is called $t_{lx0}$, as illustrated in figure 6. The actual timer expiration is typically set sometime between $t_{now}$ and $t_{lx0}$. There are several ways to calculate the time of expiration as will be described below. When the timer expires, the current job is returned to the global job scheduling function and the first job in the queue at the processor is activated. The schedule laxity and completion times are recalculated and if necessary (typically a rare condition), a new timer is set up.

Although it is possible to set the timer to expires a predetermined fixed time before $t_{lX0}$, it is often more useful to calculate a value that depends on the specific situation. For example, the timer can be calculated to expire at a specific fraction of the time remaining to $t_{lX0}$, for instance 3/5 of the remaining time, the specific fraction having a value that after tuning provides a desired performance.

However, in the global context, it is typically advantageous if a current job with great laxity is suspended as soon as possible if a job with considerably less laxity is on queue. At the same time, however, it is also advantageous if a current job with small laxity makes as much progress as possible before being suspended. One way to achieve this is to perform the following calculations.

If the laxity of the current job is greater than the laxity of the job with the least schedule laxity, the timer may be set to expire shortly, for instance 1/5th of the time remaining to $t_{lx0}$ from $t_{now}$. Otherwise, the timer may be set to expire near $t_{lx0}$, for instance 4/5th of the time remaining to $t_{lx0}$ from $t_{now}$. Using this rule improves the ability to schedule heavy workloads, as compared to the situations where single-value rules are used.

An even more flexible, but slightly more complex, alternative is to calculate the timer expiration in the following way. The laxity of the current process, $lx_{current}$, is calculated, followed by the calculation of the laxity of the job with the least laxity in the schedule, assuming it starts now, $lx_{min}$, and then calculation of the expiration time as:

$$t_{expire} = t_{lx0} - (lx_{current} - lx_{min}) * (t_{lx0} - t_{now}) / (lx_{current} + lx_{min})$$

The idea of the dual fractional expiration times and the continuous expiration is that it is globally advantageous if a very relaxed job is suspended as soon as possible if urgent jobs exist. On the other hand, when the laxity of the two jobs is nearly equal, it is globally advantageous if the current job will be handed off as late as possible. Simulation results show that this is indeed the case; timer expiration according the dual fractional and the continuous alternatives enable near full utilization of all processors while meeting all deadlines.

When the time of zero laxity is calculated as lying in the past, the current job may be returned immediately, if the following conditions are met: the job indicating negative laxity is in the queue and the current job has enough remaining laxity to tolerate a re-dispatch.

An important principle is to re-dispatch a job only if it has been worked upon. Returning completely unprocessed jobs may cause the same job to rotate infinitely between a local job scheduling function and the global job scheduling function. In actual multi-processor systems, the time elapsed between a global job scheduling function decision and local job scheduling function at a processor becoming aware of the same decision is not zero. Likewise the time elapsed from a decision by a local job scheduling function until the global job scheduling function is aware of it, is also not zero. Reasonable times amount to hundreds of bus clock cycles. Similarly, the delay from hardware timer expiration to actual job switch amount to hundreds of processor cycles.

Furthermore, another delay is the sometimes significant amount of time (typically thousands of clock cycles) spent when saving the state of one job from one processor to a common memory area, followed by the reloading to another processor from the same common memory area.

These delays and migration costs should be accounted for in scheduling decisions. Fortunately, the computations of the additional delays can be performed by the local job scheduling functions. The local job scheduling function calculates and considers additional cost when the global job scheduling function requests the return of a job. A queued job is then returned only if it is estimated to meet its deadline when processed by another processor (this adds four message delays to estimated remaining completion time). The local job scheduling function calculates and considers additional cost also when the schedule laxity is found to be negative. The current job is then returned only if it is estimated to meet its deadline assuming a full migration is needed (this adds saving and restoring times as well as four message delay units to estimated completion time).

Now with respect to job recalls, as described above in connection with figure 4B, the global job scheduling function may issue a job recall (step 457 in figure 4B), in the event it is discovered that a processor has become idle. Upon reception of such a recall request, the local job scheduling function selects one job from its local queue to return to the global job scheduling function.

There are several alternate selection criteria for which job to return. The last job on queue may be returned. This is an easy way to ensure that the job will have enough laxity left to tolerate a re-dispatch. The first job on queue that has enough laxity to handle a re-dispatch may also be returned. An advantage of such a policy is that the most urgent jobs will get a chance of an earlier start. Another selection criteria is the first job on queue that will get an earlier start after re-dispatch compared to staying in its current queue, with regard to re-dispatch delays.

In practice, it has been found that there is little difference between these different criteria, simply because it is unlikely that another processor becomes idle when there are more than one or perhaps two jobs in the queue.

It is possible for a job to be statically assigned to one processor. Jobs issued from such a task become part of the processor's commitment and are used in calculation of busy period and laxity. However, since such jobs are statically assigned, they cannot be passed to the global job scheduling function when interrupted. Similarly a statically assigned job cannot be handed over to the global job scheduling function if another processor is idle.

If the schedule laxity becomes negative upon assignment of a job and the current job is statically assigned, the local scheduler can do the following: calculate a job swap time as usual, then calculate the completion time for the statically assigned job after interruption and re-insertion in the queue, and finally the corresponding schedule laxity, i.e. a calculation of an assumption schedule laxity given the assumption that the currently running job is rescheduled. If the resulting laxity is positive, the timer is set up (as discussed above) and, if negative, no timer is set up. Upon timer expiration the statically assigned job is re-inserted in the local queue.

It is to be noted that, in the presence of a statically assigned job, the local job scheduling function must not return a dynamical, newly assigned job to the global dispatcher, since the dispatcher would likely assign the job to the same processor again. While it is conceivable that another job than the newly assigned could be returned, this would likely have similar consequence.

An inherent characteristic of scheduling algorithms that are based some form of deadline order is that they give the highest priority to jobs that are near or have missed their deadline. The result of this is that it is impossible to predict or restrict deadline misses to certain jobs. This is highly undesirable for safety-critical and high-reliability systems.

One way to avoid this is to assign a priority to jobs, which expresses the criticality of the job to the system in which it is to be executed, or how important it is that the deadline of the job is met. The algorithms discussed above can easily be extended to handle this in the following way.

For each local job scheduling function, there is one queue for each job priority level. The number of priority levels should be at least two. Jobs entering a queue of higher priority than the priority of the current job cause an interruption if necessary in the same manner as discussed above in connection with figure 6. Schedule completion time and laxity is calculated for each priority level and the local job scheduling function maintains schedule completion time and laxity tables for all priority levels. High priority jobs are dispatched before lower priority jobs.

Such an algorithm can also be complemented with round-robin scheduling at the lowest priority level for timesharing background tasks.

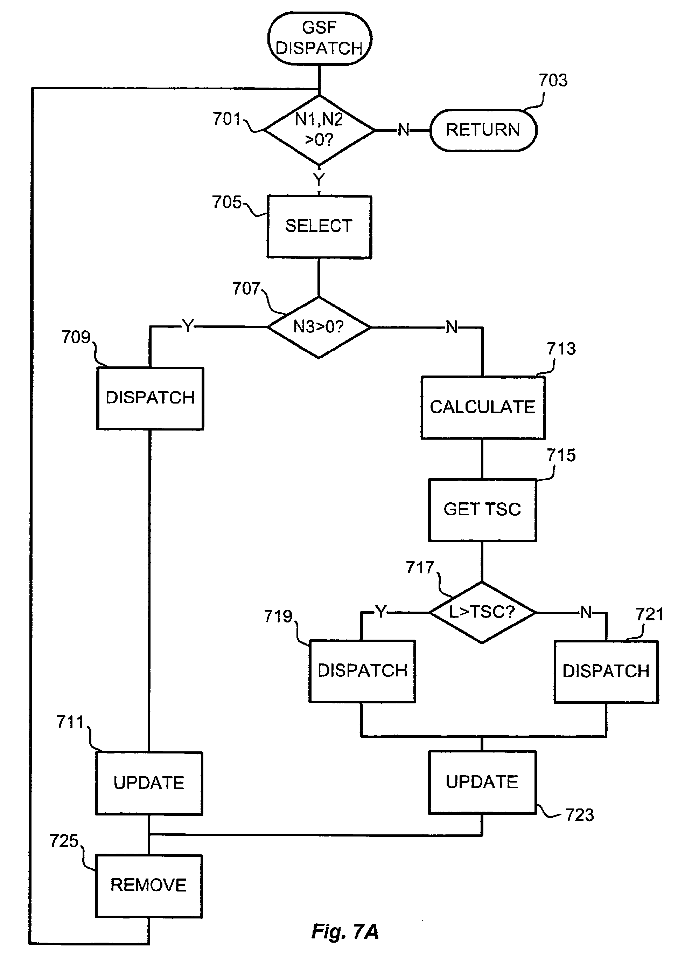

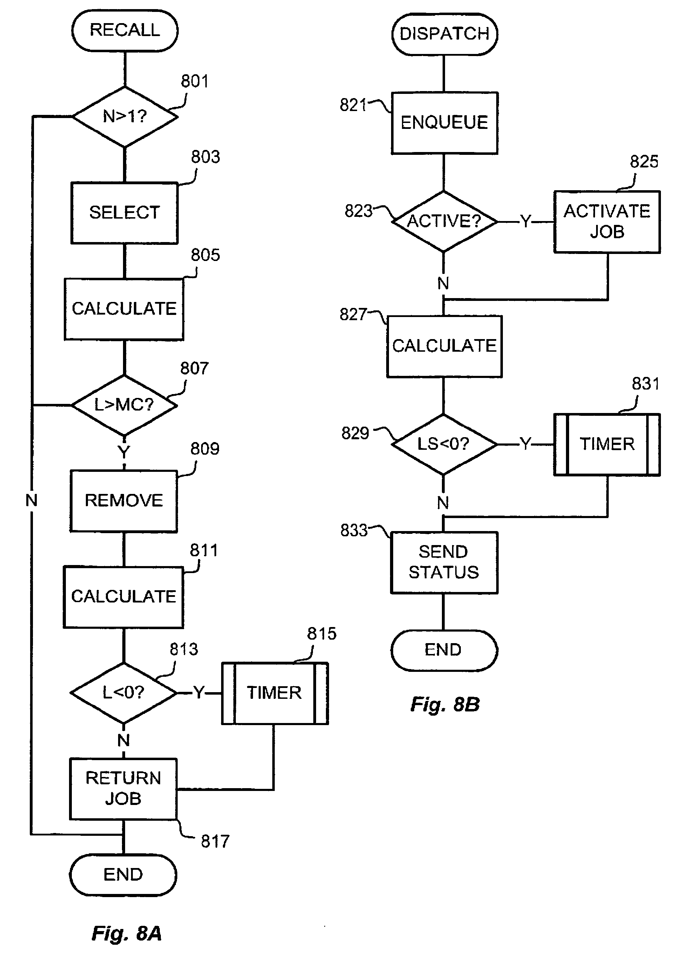

Turning now to figures 7a-c and 8a-e, scheduling involving a dual fractional timer calculation will be described by means of flow charts illustrating steps taken in a global job scheduling function and in local job scheduling functions, such as the global job scheduling function and the local job scheduling functions described above in connection with figures 1 to 6.

Figure 7a shows steps performed during dispatch of jobs performed in the global job scheduling function. In a checking step 701 a check is made whether there are any queued jobs and whether there are any idle and valid processors available. A processor is considered as valid if the processor has acknowledged a process dispatch or similar event. If that is the case, a selection step 705 is performed. In the selection step 705, the first job in the global dispatch queue is selected for dispatch. The global scheduling function has a queue holding jobs that has not yet been dispatched (typically because the majority of processors had not yet acknowledged the last dispatch when a job arrived). If no idle and valid processor was identified in the checking step 701, the process flow returns to any calling application, as indicated by a return step 703.

In a checking step 707 it is checked whether there is at least one idle processor and, if so, the job is dispatched, in a dispatch step 709, to the first idle processor. A step of updating the processor status is then performed in an update step 711. During this step the status of the processor is invalidated. For an idle processor, this entails removing it from the list of idle processors. The update step 711 is followed by a removal 725 of the job from the queue.

If no idle processor was found in step 707, the job laxity is calculated in a calculation step 713 and the earliest valid finishing time is obtained, in an obtaining step 715, from the list of {valid finishing time, processor reference} pairs. The list may be kept sorted by ascending finishing times, in which case this is a read of the first element in that list. The laxity is compared with the earliest valid finishing time in a checking step 717 and, if the laxity is larger, then the job is dispatched in a dispatching step 719 to the earliest finishing processor. If the laxity is not larger than the earliest valid finishing time, the job is dispatched in a dispatching step 721. Then a step of updating 723 the processor status is performed. Similar to step 711, the status of the processor is invalidated such that the {finishing time, processor ref} and {schedule laxity, processor ref} pairs are removed from the lists of finishing times and laxities respectively. Then the job is removed from the queue in the removal step 725.

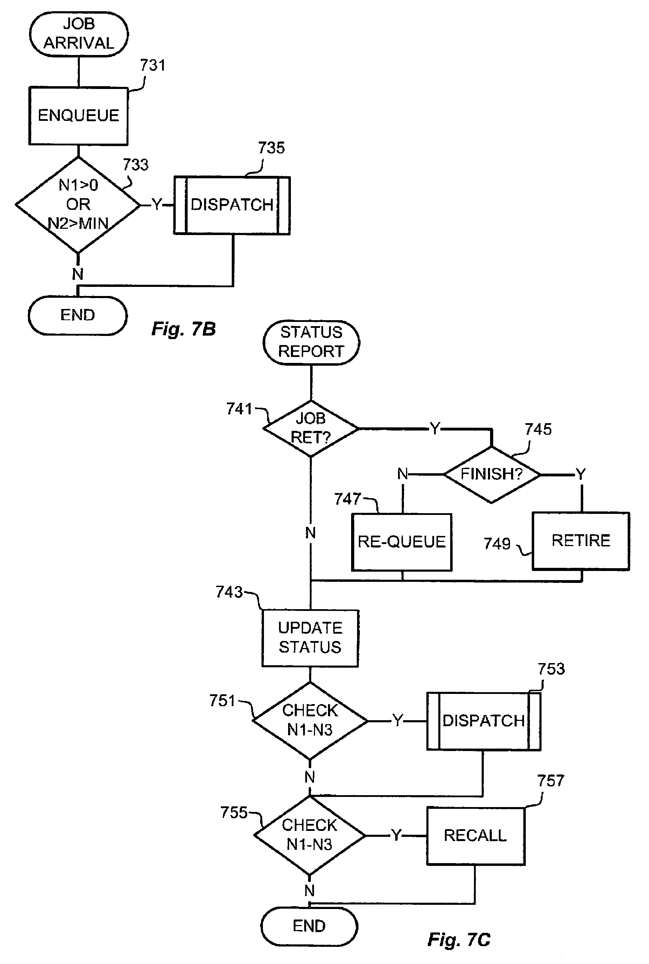

Figure 7b shows steps performed when a job arrives at the global job scheduling function. In a queuing step 731, the job is put into a queue. Then, in a checking step 733 a check is made whether there are any idle and valid processors available. If that is the case, the queued jobs are dispatched 735 as described by the flow chart in figure 7a.

Figure 7c shows steps performed when a status report is received from a local job scheduling function. In a checking step 741 it is checked whether a job is returned and, if so, a check is made in a checking step 745 whether or not the returned job has finished. If the returned job has finished, the job is retired in a retire step 749 and if the job is not finished it is re-inserted into the queue in a re-queuing step 747. If it was found that no job was returned in the checking step 741, the processor status is updated such that the processor is marked to be valid (if not already marked as such) in an update status step 743.

Then a check is made in a checking step 751 whether there are any queued jobs and whether there are any idle processors or the number of valid processors are larger than a minimum number. If so, the jobs are dispatched 753 as described by the flow chart in figure 7a. Then a check is made in a checking step 755 whether there are any idle processors and if the number of dispatched jobs are larger than the number of processors. If so, a recall request is issued, in a recall step 757, to the processor with the largest number of jobs.

Figure 8a shows steps performed in a local job scheduling function when a recall request is received from the global job scheduling function. A check 801 is made and only if there are more than one job, the procedure continues. A selection is made in a selection step 803 of the job that is associated with the largest laxity in the queue, for example the last job in the queue. In a calculation step 805, the migration cost is calculated, i.e. involving delays etc. as described above. Only if the laxity is larger than the migration cost, as checked in a checking step 807, the procedure continues. The selected job is removed from the queue in a removal step 809 after which the laxity and schedule completion time is calculated in a calculation step 811. If the schedule laxity is less than zero, as checked in a checking step 813, a re-scheduling timer is started in a activate timer step 815, as will be described in more detail below. Then the selected job is returned to the global job scheduling function along with the status of the processor in a return job step 817.

Figure 8b shows steps performed in a local job scheduling function when a job is received from the global job scheduling function. The job is enqueued in a queuing step 821. If the processor is active, as checked in a checking step 823, the first job in the queue is activated in an activation step 825. If the processor is not active, the schedule completion time and the laxity is calculated in a calculation step 827. If the schedule laxity is less than zero, as checked in a checking step 829, a re-scheduling timer is started in a activate timer step 831, as will be described in more detail below. Then the status of the processor is sent to the global job scheduling function in a send status step 833.

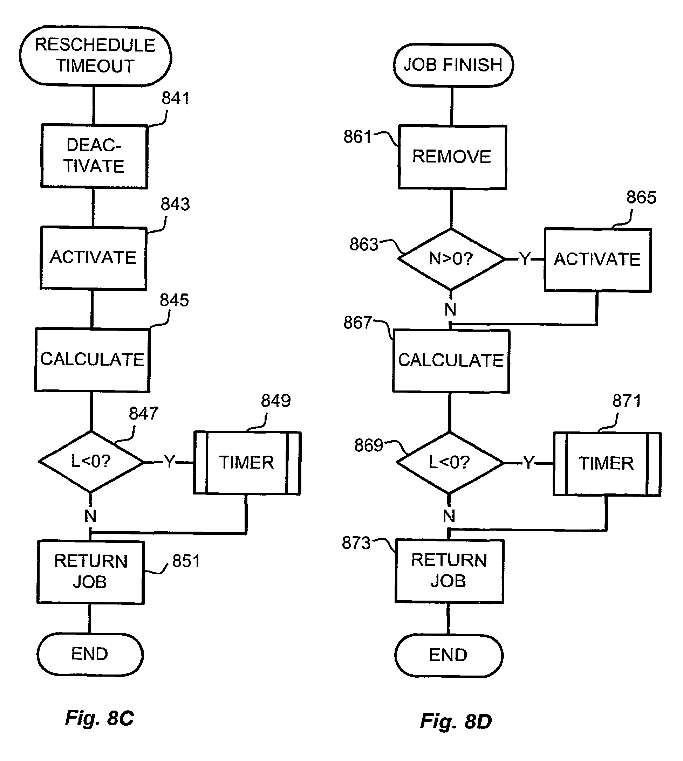

Figure 8c shows steps performed in a local job scheduling function when a reschedule timer expires. In a deactivation step 841, the current job is deactivated and removed from the queue. The first job in the queue is then activated in an activation step 843. Then the schedule completion time and laxity is calculated in a calculation step 845. If the schedule laxity is less than zero, as checked in a checking step 847, a re-scheduling timer is started in a activate timer step 849, as will be described in more detail below. Then the former current job is returned to the global job scheduling function along with the status of the processor in a return job step 851.

Figure 8d shows steps performed in a local job scheduling function when a job finishes. The finished job is removed from the queue in a removal step 861. Then it is checked in a checking step 863 whether there are any queued jobs and, if so, the first job in the queue is activated in an activation step 865. If no queued jobs exist, as checked in the checking step 863, the schedule completion time and the laxity is calculated in a calculation step 867. That is, the completion time is set to the current time, and the laxity is set to a representation of infinity. If the schedule laxity is less than zero, as checked in a checking step 869, a re-scheduling timer is started in a activate timer step 871, as will be described in more detail below. Then the finished job is returned to the global job scheduling function along with the status of the processor in a return job step 873.

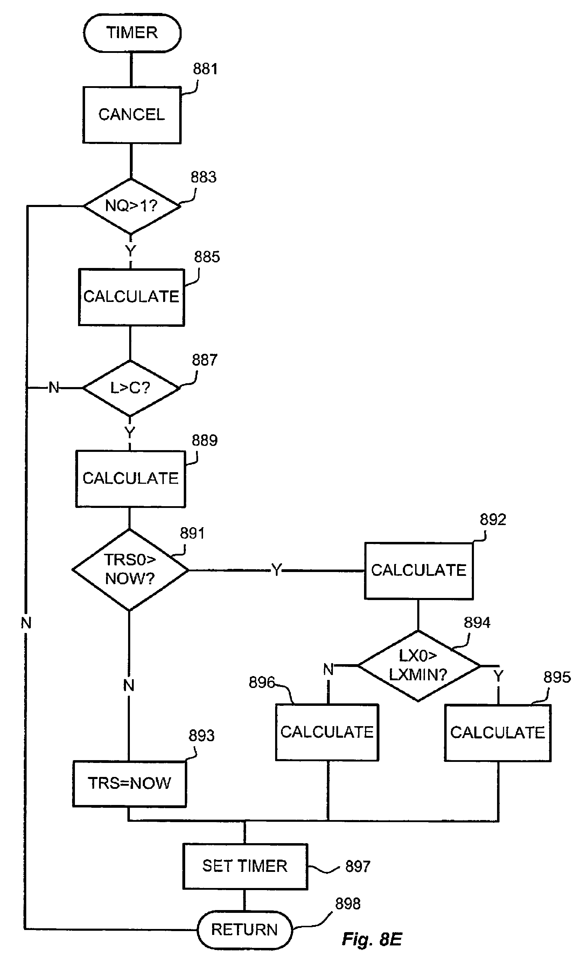

Turning now to figure 8e, a timer procedure will be described that takes place in a local job scheduling function. The timer procedure of figure 8e is started as described above in connection with any of figures 8a-d. If already set, the timer is canceled in a cancel timer step 881. Then, only if there is more than one queued job, as checked in a checking step 883, the timer procedure continues. The migration cost related to the currently running job is calculated in a calculation step 885 and compared, in a checking step 887, with the laxity of the current job. The process continues only if the laxity of the current job is greater than the calculated migration cost. Then the procedure continues with calculation, in a calculation step 889, of an expiration time point by adding the schedule laxity to the completion time of the currently running job. This expiration time point is then compared, in a checking step 891, with the current time and, if it is not later than the current time, an expiration time point for the currently running job is set, in a setting step 893, to the current time, after which the timer is set to this expiration time point in a setting step 897.

On the other hand, if it was found in the checking step 891 that the calculated expiration time point is later than the current time, a determination is made, in a calculation step 892, of the laxity of the current job and a minimum laxity. The minimum laxity being the laxity of the job having least schedule laxity. These values are then compared, in a checking step 894, and if the laxity of the current job is not larger than the laxity of the job having least schedule laxity, then an expiration time point for the currently running job is set, in a setting step 896, to the current time plus a first predetermined fraction of the difference between the calculated expiration time point and the current time, after which the timer is set to this expiration time point in the setting step 897. If, in the checking step 894, it is found that the laxity of the current job is larger than the laxity of the job having least schedule laxity, then an expiration time point for the currently running job is set, in a setting step 895, to the current time plus a second predetermined fraction of the difference between the calculated expiration time point and the current time, after which the timer is set to this expiration time point in the setting step 897. The values of the predetermined first and second fractions may be selected such that the fractional in step 895 is between 0.05 and 0.2, while the fractional in step 896 is between 0.6 and 0.9. In performance simulations the values 2/16 (0.125) and 11/16 (0.6875) have been used, respectively, with excellent results. Empirical evidence suggest that fractionals in the given ranges work very well for many sets of tasks.

**Claims**

1. A method of scheduling processing jobs in a multi-processor computing apparatus (100, 200), the jobs being associated with at least one respective deadline, the method involving communication between a global job scheduling function (102, 202) and a plurality of local job scheduling functions (112, 212), each local job scheduling function being associated with a respective processor (108, 208), comprising:

   - maintaining, in the global job scheduling function, updated status information regarding:

     - any idle processor,
     - points in time when any processor is expected to be idle,
     - laxity values associated with any processor,

   the method further comprising:

   - scheduling, in the global job scheduling function, jobs by:

     - dispatching jobs to the local job scheduling functions, the dispatching being conditioned on the status information,
     - recalling jobs from the local job scheduling functions at any non-idle processor and dispatching any recalled job to a local job scheduling function at an idle processor,
     - receiving, from the local job scheduling functions, interrupted jobs and dispatching any received interrupted job to a local job scheduling function, the dispatching being conditioned on the status information,

   where the maintaining of updated status information comprises:

     - receiving, from each local job scheduling function, a respective calculated schedule laxity value being a minimum difference between finishing deadlines for jobs and expected job completion times associated with jobs currently dispatched to each respective processor, and

   where the scheduling of a job comprises:

     - checking whether an idle processor exists and, if so, dispatching the job to the local job scheduling function of the idle processor,

   otherwise:

     - calculating an expected completion time of the job, the calculation relating to a situation involving the existence of an idle processor,
     - calculating a job laxity value as a difference between the deadline for the job and the calculated expected completion time for the job,

- checking whether the calculated job laxity is greater than a difference between the earliest point in time when any processor is expected to be idle and the current time and, if so, dispatching the job to the local job scheduling function of that processor,

otherwise:

- dispatching the job to the local job scheduling function of the processor having the largest schedule laxity value.

2. A method of scheduling processing jobs in a multi-processor computing apparatus (100, 200), the jobs being associated with at least one respective deadline, the method involving communication between a global job scheduling function (102, 202) and a plurality of local job scheduling functions (112, 212), each local job scheduling function being associated with a respective processor (108, 208), comprising:

- maintaining, in the global job scheduling function, updated status information regarding:

- any idle processor,
- points in time when any processor is expected to be idle,
- laxity values associated with any processor,

the method further comprising:

- scheduling, in the global job scheduling function, jobs by:

- dispatching jobs to the local job scheduling functions, the dispatching being conditioned on the status information,
- recalling jobs from the local job scheduling functions at any non-idle processor and dispatching any recalled job to a local job scheduling function at an idle processor,
- receiving, from the local job scheduling functions, interrupted jobs and dispatching any received interrupted job to a local job scheduling function, the dispatching being conditioned on the status information,

where the maintaining of updated status information comprises:

- receiving, from each local job scheduling function, a respective calculated schedule laxity value being a minimum difference between finishing deadlines for jobs and expected job completion times associated with jobs currently dispatched to each respective processor, and

where the scheduling of a job comprises:

- checking whether an idle processor exists and, if so, dispatching the job to the local job scheduling function of the idle processor,

otherwise:

- checking whether a starting deadline for the job is later than the earliest point in time when any processor is expected to be idle and, if so, dispatching the job to the local job scheduling function of that processor,

otherwise:

- dispatching the job to the local job scheduling function of the processor having the largest schedule laxity value.

3. The method of any of claims 1 to 2, comprising, in the global job scheduling function:

- determining from the updated status information whether at least one processor is idle and, if so:
- determining recall decision data comprising information regarding the total number of jobs that currently are dispatched to the local job scheduling functions, the number of non-idle processors, and information regarding which of the processors is the busiest,
- deciding, using the recall decision data, whether to recall a job from the busiest processor and, if so:

- sending a recall request to the busiest processor,
- receiving a job from the busiest processor, and
- dispatching the received job to the local job scheduling function of an idle processor.

4. The method of claim 3, comprising, in a local job scheduling function:

- receiving a job recall request from the global job scheduling function,
- estimating whether queued jobs can meet their respective finishing deadlines if processed by any processor, and, depending on the estimation:
- returning a job to the global job scheduling function.

5. The method of claim 4, comprising, in a local job scheduling function:

- determining return selection criteria for deciding which job to return to the global job scheduling function, the determining of return selection criteria comprising any of:

- a job last in a queue of jobs,
- calculating re-dispatch delay values for queued jobs and comparing the re-dispatch delay values with laxity values of the queued jobs,
- calculating re-dispatch delay values for queued jobs and determining a respective starting time, taking account of the re-dispatch delay values, at any processor and comparing these starting times, and following the determination of the return selection criteria:

- returning a job to the global job scheduling function according to the return selection criteria.

6. The method of any of claims 1 to 5, comprising, in a local job scheduling function:

- checking whether the schedule laxity is less than zero and, if so:
- calculating an expiration time point being the point in time at which a currently running job must stop running in order for the schedule laxity to be zero,
- interrupting the currently running job, the interruption taking place at a non-zero time interval before the expiration time point,
- returning the interrupted job to the global job scheduling function,
- activating a queued job, and
- recalculating the schedule laxity.

7. The method of claim 6, where the non-zero time interval is determined by:

- calculating the laxity of the currently running job,
- calculating a an assumption laxity for each queued job, as the difference between an expected completion time and a finishing deadline relative to a common assumed starting point in time,
- identifying the smallest assumption laxity among the queued jobs,
- setting the non-zero time interval, in case the laxity of the currently running job is greater than the identified smallest assumption laxity, to a first timer interval value, and otherwise:
- setting the non-zero time interval to a second timer interval value, the second timer interval value being longer than the first timer interval value.

8. The method of claim 6, where the non-zero time interval is determined by:

- calculating the laxity of the currently running job,
- calculating a an assumption laxity for each queued job, as the difference between an expected completion time and a finishing deadline relative to a common assumed starting point in time,
- identifying the smallest assumption laxity among the queued jobs,
- setting the non-zero time interval to a value that is proportional to the difference between the laxity of the currently running job and the smallest assumption laxity and inversely proportional to the sum of the laxity of the currently running job and the smallest assumption laxity.

9. The method of any of claims 6 to 8, comprising, in a local job scheduling function:

- receiving a job recall request from the global job scheduling function,
- estimating whether queued jobs can meet their respective finishing deadlines taking account of any delay caused by saving and restoring data associated with re-scheduling between processors, and, depending on the estimation:
- returning a job to the global job scheduling function.

10. The method of any of claims 1 to 5, comprising, in a local job scheduling function:

- checking whether the schedule laxity is less than zero and, if so:
- calculating an expiration time point being the point in time at which a currently running job must stop running in order for the schedule laxity to be zero,
- calculating an assumption schedule laxity given the assumption that the currently running job is rescheduled,
- interrupting, if the calculated assumption schedule laxity is positive, the currently running job at a non-zero time interval before the expiration time point, and otherwise interrupting the currently running job immediately,
- activating a queued job, and
- recalculating the schedule laxity.

11. The method of any of claims 1 to 10, comprising, in a local job scheduling function:

- assigning a priority level to each job,
- maintaining a plurality of job queues, each queue containing jobs having a single priority level, and
- maintaining, in the global job scheduling function, updated status information regarding the plurality of queues.

12. The method of any of claims 1 to 11, wherein the global job scheduling function is associated with a specific processor.

13. The method of any of claims 1 to 11, wherein the global job scheduling function is associated with a plurality of processors.

14. The method of any of claims 1 to 13, wherein the maintaining of updated status information comprises:

- maintaining a list of processors sorted in order of ascending points in time when the processors are expected to be idle, and
- maintaining a list of processors sorted in order of descending laxity.

15. The method of claim 14, wherein the maintaining of updated status information further comprises:

- maintaining a first-in-first-out list of idle processors.

16. A computer program comprising software instructions that, when executed in a multi-processor processing device, performs the method of any of claims 1 to 15.

17. A multi-processor processing device (100, 200, 300) comprising processing and memory means (108, 208, 301, 303, 305) that are configured such that it is capable of performing the method of any of claims 1 to 15.

18. A mobile communication device (300) comprising the multi-processor processing device of claim 17.

**Patentansprüche**

1. Verfahren zum Disponieren von Verarbeitungsaufgaben in einer Multiprozessor-Rechenvorrichtung (100, 200), wobei den Aufgaben mindestens ein jeweiliger Termin zugeordnet ist, wobei das Verfahren Kommunikation zwischen einer globalen Aufgabenscheduling-Funktion (102, 202) und einer Mehrzahl von lokalen Aufgabenscheduling-Funktionen (112, 212) umfasst, und jede lokale Aufgabenscheduling-Funktion einem jeweiligen Prozessor (108, 208) zugeordnet ist, umfassend:

- Pflegen in der globalen Aufgabenscheduling-Funktion von aktualisierten Statusinformationen in Bezug auf:

- einen beliebigen freien Prozessor,

- Zeitpunkte, zu welchen ein beliebiger Prozessor voraussichtlich frei ist,
- Laxity-Werte, die einem beliebigen Prozessor zugeordnet sind,

wobei das Verfahren ferner umfasst:

- Disponieren von Jobs in der globalen Aufgabenscheduling-Funktion durch:

- Versenden von Aufgaben an die lokalen Aufgabenscheduling-Funktionen, wobei das Versenden von den Statusinformationen abhängt,
- Abrufen von Aufgaben von den lokalen Aufgabenscheduling-Funktionen an einem beliebigen beschäftigten Prozessor und Versenden einer beliebigen abgerufenen Aufgabe an eine lokale Aufgabenscheduling-Funktion an einem freien Prozessor,
- Empfangen von den lokalen Aufgabenscheduling-Funktionen von unterbrochenen Aufgaben und Versenden einer beliebigen empfangenen unterbrochenen Aufgabe an eine lokale Aufgabenscheduling-Funktion, wobei das Versenden von den Statusinformationen abhängt,

wobei das Pflegen von aktualisierten Statusinformationen umfasst:

- Empfangen von jeder lokalen Aufgabenscheduling-Funktion eines jeweiligen berechneten Ausführungsplan-Laxity-Wertes, der eine Mindestdifferenz zwischen Fertigstellungsterminen für Aufgaben und voraussichtlichen Aufgabenfertigstellungszeiten ist, die Aufgaben zugeordnet sind, die gerade an jeden jeweiligen Prozessor versendet werden, und

wobei das Disponieren einer Aufgabe umfasst:

- Prüfen, ob ein freier Prozessor vorhanden ist, und, wenn dies der Fall ist, Versenden der Aufgabe an die lokale Aufgabenscheduling-Funktion des freien Prozessors,

andernfalls :

- Berechnen einer voraussichtlichen Fertigstellungszeit der Aufgabe, wobei sich die Berechnung auf eine Situation bezieht, welche das Vorhandensein eines freien Prozessors umfasst,
- Berechnen eines Aufgaben-Laxity-Wertes als eine Differenz zwischen dem Termin für die Aufgabe und der berechneten voraussichtlichen Fertigstellungszeit für die Aufgabe,
- Prüfen, ob der berechnete Aufgaben-Laxity-Wert größer als eine Differenz zwischen dem frühesten Zeitpunkt, zu dem ein beliebiger Prozessor voraussichtlich frei ist, und der aktuellen Zeit ist, und, wenn dies der Fall ist, Versenden der Aufgabe an die lokale Aufgabenscheduling-Funktion dieses Prozessors,

andernfalls :

- Versenden der Aufgabe an die lokale Aufgabenscheduling-Funktion mit dem größten Ausführungsplan-Laxity-Wert.

2. Verfahren zum Disponieren von Verarbeitungsaufgaben in einer Multiprozessor-Rechenvorrichtung (100, 200), wobei den Aufgaben mindestens ein jeweiliger Termin zugeordnet ist, wobei das Verfahren Kommunikation zwischen einer globalen Aufgabenscheduling-Funktionen (102, 202) und einer Mehrzahl von lokalen Aufgabenscheduling-Funktionen (112, 212) umfasst, und jede lokale Aufgabenscheduling-Funktion einem jeweiligen Prozessor (108, 208) zugeordnet ist, umfassend:

- Pflegen in der globalen Aufgabenscheduling-Funktion von aktualisierten Statusinformationen in Bezug auf:
- einen beliebigen freien Prozessor,
- Zeitpunkte, zu welchen ein beliebiger Prozessor voraussichtlich frei ist,
- Laxity-Werte, die einem beliebigen Prozessor zugeordnet sind,

wobei das Verfahren ferner umfasst:

- Disponieren von Jobs in der globalen Aufgabenscheduling-Funktion durch:

- Versenden von Aufgaben an die lokalen Aufgabenscheduling-Funktionen, wobei das Versenden von den Statusinformationen abhängt,
- Abrufen von Aufgaben von den lokalen Aufgabenscheduling-Funktionen an einem beliebigen beschäftigten Prozessor und Versenden einer beliebigen abgerufenen Aufgabe an eine lokale Aufgabenscheduling-Funktion an einem freien Prozessor,
- Empfangen von den lokalen Aufgabenscheduling-Funktionen von unterbrochenen Aufgaben und Versenden einer beliebigen empfangenen unterbrochenen Aufgabe an eine lokale Aufgabenscheduling-Funktion, wobei das Versenden von den Statusinformationen abhängt,

wobei das Pflegen von aktualisierten Statusinformationen umfasst:

- Empfangen von jeder lokalen Aufgabenscheduling-Funktion eines jeweiligen berechneten Ausführungsplan-Laxity-Wertes, der eine Mindestdifferenz zwischen Fertigstellungsterminen für Aufgaben und voraussichtlichen Aufgabenfertigstellungszeiten ist, die Aufgaben zugeordnet sind, die gerade an jeden jeweiligen Prozessor versendet werden, und

wobei das Disponieren einer Aufgabe umfasst:

- Prüfen, ob ein freier Prozessor vorhanden ist, und, wenn dies der Fall ist, Versenden der Aufgabe an die lokale Aufgabenscheduling-Funktion des freien Prozessors,

andernfalls :

- Prüfen, ob ein Starttermin für die Aufgabe später als der früheste Zeitpunkt ist, zu dem ein beliebiger Prozessor voraussichtlich frei ist, und, wenn dies der Fall ist, Versenden der Aufgabe an die lokale Aufgabenscheduling-Funktion dieses Prozessors,

andernfalls :

- Versenden der Aufgabe an die lokale Aufgabenscheduling-Funktion mit dem größten Ausführungsplan-Laxity-Wert.

3. Verfahren nach einem der Ansprüche 1 bis 2, umfassend in der globalen Aufgabenscheduling-Funktion:

- Bestimmen aus den aktualisierten Statusinformationen, ob mindestens ein Prozessor frei ist, und, wenn dies der Fall ist:

- Bestimmen von Abrufentscheidungsdaten, die Information in Bezug auf die Gesamtanzahl von Aufgaben, die gerade an die lokalen Aufgabenscheduling-Funktionen versendet werden, die Anzahl von beschäftigten Prozessoren und Informationen bezüglich dessen umfassen, welcher der Prozessoren der meistbeschäftigte ist,
- Entscheiden unter Verwendung der Abrufentscheidungsdaten, ob eine Aufgabe vom meistbeschäftigten Prozessor abgerufen werden soll, und, wenn dies der Fall ist:

- Senden einer Abrufanforderung an den meistbeschäftigten Prozessor,
- Empfangen einer Aufgabe vom meistbeschäftigten Prozessor, und
- Versenden der empfangenen Aufgabe an die lokale Aufgabenscheduling-Funktion eines freien Prozessors.

4. Verfahren nach Anspruch 3, umfassend in einer lokalen Aufgabenscheduling-Funktion:

- Empfangen einer Aufgabenabrufanforderung von der globalen Aufgabenscheduling-Funktion,
- Schätzen, ob in Warteschlangen eingereihte Aufgaben ihre jeweiligen Fertigstellungstermine einhalten können, wenn durch einen beliebigen Prozessor verarbeitet, und abhängig von der Schätzung:
- Zurücksenden einer Aufgabe an die globale Aufgabenscheduling-Funktion.

5. Verfahren nach Anspruch 4, umfassend in einer lokalen Aufgabenscheduling-Funktion:

- Bestimmen von Rücksendungsauswahlkriterien zum Entscheiden, welche Aufgabe an die globale Aufgabenscheduling-Funktion zurückgesendet werden soll, wobei das Bestimmen von Rücksendungsauswahlkriterien eines von Folgendem umfasst:

- einer Aufgabe, die in einer Warteschlange von Aufgaben als letzte eingereiht ist,
- Berechnen von Wiederversendungsverzögerungswerten für in Warteschlangen eingereihte Aufgaben und Vergleichen der Wiederversendungsverzögerungswerte mit Laxity-Werten der in Warteschlangen eingereihten Aufgaben,
- Berechnen von Wiederversendungsverzögerungswerten für in Warteschlangen eingereihte Aufgaben und Bestimmen einer jeweiligen Startzeit unter Berücksichtigung der Wiederversendungsverzögerungswerte an einem beliebigen Prozessor und Vergleichen dieser Startzeiten, und nach der Bestimmung der Rücksendungsauswahlkriterien:

- Zurücksenden einer Aufgabe an die globale Aufgabenscheduling-Funktion gemäß den Rücksendungsauswahlkriterien.

6. Verfahren nach einem der Ansprüche 1 bis 5, umfassend in einer lokalen Aufgabenscheduling-Funktion:

- Prüfen, ob die Ausführungsplan-Laxity niedriger als null ist, und, wenn dies der Fall ist:
- Berechnen eines Ablaufzeitpunkts, welcher der Zeitpunkt ist, zu dem eine gerade laufende Aufgabe zu laufen aufhören muss, damit die Ausführungsplan-Laxity null ist,
- Unterbrechen der gerade laufenden Aufgabe, wobei die Unterbrechung in einem von Null verschiedenen Zeitintervall vor dem Ablaufzeitpunkt stattfindet,
- Zurücksenden der unterbrochenen Aufgabe an die globale Aufgabenscheduling-Funktion,
- Aktivieren einer in einer Warteschlange eingereihten Aufgabe, und
- Neuberechnen der Ausführungsplan-Laxity.

7. Verfahren nach Anspruch 6, wobei das von Null verschiedene Zeitintervall bestimmt wird durch:

- Berechnen der Laxity der gerade laufenden Aufgabe,
- Berechnen einer Annahme-Laxity für jede in Warteschlangen eingereihte Aufgabe als die Differenz zwischen einer voraussichtlichen Fertigstellungszeit und einem Fertigstellungstermin in Bezug auf einen gemeinsamen angenommenen Startzeitpunkt,
- Identifizieren der kleinsten Annahme-Laxity unter den in Warteschlangen eingereihten Aufgaben,
- Setzen des von Null verschiedenen Zeitintervalls, falls die Laxity der gerade laufenden Aufgabe größer als die identifizierte kleinste Annahme-Laxity ist, auf einen ersten Zeitgeber-Intervallwert, und andernfalls:
- Setzen des von Null verschiedenen Zeitintervalls auf einen zweiten Zeitgeber-Intervallwert, wobei der zweite Zeitgeber-Intervallwert länger als der erste Zeitgeber-Intervallwert ist.

8. Verfahren nach Anspruch 6, wobei das von Null verschiedene Zeitintervall bestimmt wird durch:

- Berechnen der Laxity der gerade laufenden Aufgabe,
- Berechnen einer Annahme-Laxity für jede in Warteschlangen eingereihte Aufgabe als die Differenz zwischen einer voraussichtlichen Fertigstellungszeit und einem Fertigstellungstermin in Bezug auf einen gemeinsamen angenommenen Startzeitpunkt,
- Identifizieren der kleinsten Annahme-Laxity unter den in Warteschlangen eingereihten Aufgaben,
- Setzen des von Null verschiedenen Zeitintervalls auf einen Wert, der proportional zur Differenz zwischen der Laxity der gerade laufenden Aufgabe und der kleinsten Annahme-Laxity und umgekehrt proportional zur Summe der Laxity der gerade laufenden Aufgabe und der kleinsten Annahme-Laxity ist.

9. Verfahren nach einem der Ansprüche 6 bis 8, umfassend in einer lokalen Aufgabenscheduling-Funktion:

- Empfangen einer Aufgabenabrufanforderung von der globalen Aufgabenscheduling-Funktion,
- Schätzen, ob in Warteschlangen eingereihte Aufgaben ihre jeweiligen Fertigstellungstermine einhalten können, unter Berücksichtigung jeglicher Verzögerung, die durch Speichern und Wiederherstellen von Daten in Verbindung mit Rescheduling zwischen Prozessoren verursacht wird, und abhängig von der Schätzung:
- Zurücksenden einer Aufgabe an die globale Aufgabenscheduling-Funktion.

**10.** Verfahren nach einem der Ansprüche 1 bis 5, umfassend in einer lokalen Aufgabescheduling-Funktion:

- Prüfen, ob die Ausführungsplan-Laxity niedriger als null ist, und, wenn dies der Fall ist:
- Berechnen eines Ablaufzeitpunkts, welcher der Zeitpunkt ist, zu dem eine gerade laufende Aufgabe zu laufen aufhören muss, damit die Ausführungsplan-Laxity null ist,
- Berechnen einer Annahme-Ausführungsplan-Laxity, vorausgesetzt, dass die gerade laufende Aufgabe neu disponiert wird,
- Unterbrechen, wenn die berechnete Annahme-Ausführungsplan-Laxity positiv ist, der gerade laufenden Aufgabe in einem von Null verschiedenen Zeitintervall vor dem Ablaufzeitpunkt, und andernfalls unverzügliches Unterbrechen der gerade laufenden Aufgabe,
- Aktivieren einer in einer Warteschlange eingereihten Aufgabe, und
- Neuberechnen der Ausführungsplan-Laxity.

**11.** Verfahren nach einem der Ansprüche 1 bis 10, umfassend in einer lokalen Aufgabenscheduling-Funktion:

- Zuweisen einer Prioritätsstufe zu jeder Aufgabe,
- Pflegen einer Mehrzahl von Aufgabenwarteschlangen, wobei jede Warteschlange Aufgaben mit einer einzigen Prioritätsstufe enthält, und
- Pflegen in der globalen Aufgabenscheduling-Funktion von aktualisierten Statusinformationen in Bezug auf die Mehrzahl von Warteschlangen.

**12.** Verfahren nach einem der Ansprüche 1 bis 11, wobei die globale Aufgabenscheduling-Funktion einem spezifischen Prozessor zugeordnet ist.

**13.** Verfahren nach einem der Ansprüche 1 bis 11, wobei die globale Aufgabenscheduling-Funktion einer Mehrzahl von spezifischen Prozessoren zugeordnet ist.

**14.** Verfahren nach einem der Ansprüche 1 bis 13, wobei das Pflegen von aktualisierten Statusinformationen umfasst:

- Führen einer Liste von Prozessoren, die nach Zeitpunkten, zu welchen die Prozessoren voraussichtlich frei sind, in aufsteigender Reihenfolge sortiert sind, und
- Führen einer Liste von Prozessoren, die nach Laxity in absteigender Reihenfolge sortiert sind.

**15.** Verfahren nach Anspruch 14, wobei das Pflegen von aktualisierten Statusinformationen ferner umfasst:

- Führen einer Zuerst-rein-zuerst-raus-Liste von freien Prozessoren.

**16.** Computerprogramm, umfassend Software-Anweisungen, das, wenn in einer Multiprozessor-Verarbeitungsvorrichtung ausgeführt, das Verfahren nach einem der Ansprüche 1 bis 15 ausführt.

**17.** Multiprozessor-Verarbeitungsvorrichtung (100, 200, 300), umfassend Verarbeitungs- und Speichermittel (108, 208, 301, 303, 305), das derart konfiguriert sind, dass es in der Lage ist, das Verfahren nach einem der Ansprüche 1 bis 15 auszuführen.

**18.** Mobiles Kommunikationsgerät (300), umfassend die Multiprozessor-Verarbeitungsvorrichtung nach Anspruch 17.


**Revendications**

**1.** Procédé de programmation de tâches de traitement dans un appareil informatique multiprocesseur (100, 200), les tâches étant associées à au moins un délai respectif, le procédé impliquant une communication entre une fonction de programmation globale de tâches (102, 202) et une pluralité de fonctions de programmation locale de tâches (112, 212), chaque fonction de programmation locale de tâches étant associée à un processeur respectif (108, 208), comprenant le fait :

- de maintenir, dans la fonction de programmation globale de tâches, des informations d'état mis à jour concernant :

- un processeur inactif quelconque,
- des points temporels où il est prévu qu'un processeur quelconque serait inactif,
- des valeurs de laxisme associées à un processeur quelconque,

le procédé comprenant en outre le fait :

- de programmer, dans la fonction de programmation globale de tâches, des tâches :

- en distribuant des tâches aux fonctions de programmation locale de tâches, la distribution dépendant des informations d'état,
- en rappelant des tâches à partir des fonctions de programmation locale de tâches au niveau d'un processeur actif quelconque et en distribuant une tâche rappelée quelconque à une fonction de programmation locale de tâches au niveau d'un processeur inactif,
- en recevant, à partir des fonctions de programmation locale de tâches, des tâches interrompues et en distribuant une tâche interrompue reçue quelconque à une fonction de programmation locale de tâches, la distribution dépendant des informations d'état,

où le maintien d'informations d'état mis à jour comprend le fait :

- de recevoir, à partir de chaque fonction de programmation locale de tâches, une valeur de laxisme de programme calculée respective qui est une différence minimale entre des délais de fin pour des tâches et des temps d'achèvement de tâches prévus associés à des tâches actuellement distribuées à chaque processeur respectif, et où la programmation d'une tâche comprend le fait :
- de vérifier si un processeur inactif existe et, si c'est le cas, de distribuer la tâche à la fonction de programmation locale de tâches du processeur inactif, sinon :
- de calculer un temps d'achèvement prévu de la tâche, le calcul étant relatif à une situation impliquant l'existence d'un processeur inactif,
- de calculer une valeur de laxisme de tâche en tant que différence entre le délai de la tâche et le temps d'achèvement prévu calculé pour la tâche,
- de vérifier si le laxisme de tâche calculé est supérieur à une différence entre le point temporel le plus antérieur où il est prévu qu'un processeur quelconque serait inactif et le temps actuel et, si c'est le cas, de distribuer la tâche à la fonction de programmation locale de tâches de ce processeur,

sinon :

- de distribuer la tâche à la fonction de programmation locale de tâches du processeur ayant la plus grande valeur de laxisme de programme.

2. Procédé de programmation de tâches de traitement dans un appareil informatique multiprocesseur (100, 200), les tâches étant associées à au moins un délai respectif, le procédé impliquant une communication entre une fonction de programmation globale de tâches (102, 202) et une pluralité de fonctions de programmation locale de tâches (112, 212), chaque fonction de programmation locale de tâches étant associée à un processeur respectif (108, 208), comprenant le fait :

- de maintenir, dans la fonction de programmation globale de tâches, des informations d'état mis à jour concernant :

- un processeur inactif quelconque,
- des points temporels où il est prévu qu'un processeur quelconque serait inactif,
- des valeurs de laxisme associées à un processeur quelconque,

le procédé comprenant en outre le fait :

- de programmer, dans la fonction de programmation globale de tâches, des tâches :

- en distribuant des tâches aux fonctions de programmation locale de tâches, la distribution dépendant des informations d'état,
- en rappelant des tâches à partir des fonctions de programmation locale de tâches au niveau d'un processeur actif quelconque et en distribuant une tâche rappelée quelconque à une fonction de programmation locale de tâches au niveau d'un processeur inactif,

- en recevant, à partir des fonctions de programmation locale de tâches, des tâches interrompues et en distribuant une tâche interrompue reçue quelconque à une fonction de programmation locale de tâches, la distribution dépendant des informations d'état,

où le maintien d'informations d'état mis à jour comprend le fait :

- de recevoir, à partir de chaque fonction de programmation locale de tâches, une valeur de laxisme de programme calculée respective qui est une différence minimale entre des délais de fin des tâches et des temps d'achèvement de tâches prévus associés aux tâches actuellement distribuées à chaque processeur respectif, et où la programmation d'une tâche comprend le fait :
- de vérifier si un processeur inactif existe et, si c'est le cas, de distribuer la tâche à la fonction de programmation locale de tâches du processeur inactif,

sinon :

- de vérifier si un délai de début de la tâche est ultérieur au point temporel le plus antérieur où il est prévu qu'un processeur quelconque serait inactif, si c'est le cas, de distribuer la tâche à la fonction de programmation locale de tâches de ce processeur,

sinon :

- de distribuer la tâche à la fonction de programmation locale de tâches du processeur ayant la plus grande valeur de laxisme de programme.

3. Procédé de l'une des revendications 1 et 2, comprenant, dans la fonction de programmation globale de tâches, le fait :

- de déterminer à partir des informations d'état mis à jour si au moins un processeur est inactif, et, si c'est le cas :
- de déterminer des données de décision de rappel comprenant des informations concernant le nombre total de tâches qui sont actuellement distribuées aux fonctions de programmation locale de tâches, le nombre de processeurs actifs, et des informations concernant lequel des processeurs est le plus occupé,
- de décider, en utilisant les données de décision de rappel, s'il faut rappeler une tâche à partir du processeur le plus occupé et, si c'est le cas :

- d'envoyer une demande de rappel au processeur le plus occupé,
- de recevoir une tâche à partir du processeur le plus occupé, et
- de distribuer la tâche reçue à la fonction de programmation locale de tâches d'un processeur inactif.

4. Procédé de la revendication 3, comprenant, dans une fonction de programmation locale de tâches, le fait :

- de recevoir une demande de rappel de tâches à partir de la fonction de programmation globale de tâches,
- d'estimer si des tâches en file d'attente peuvent respecter leurs délais de fin respectifs si elles sont traitées par un processeur quelconque, et, en fonction de l'estimation :
- de renvoyer une tâche à la fonction de programmation globale de tâches.

5. Procédé de la revendication 4, comprenant, dans une fonction de programmation locale de tâches, le fait :

- de déterminer des critères de sélection de retour pour décider quelle tâche renvoyer à la fonction de programmation globale de tâches, la détermination de critères de sélection de retour comprenant l'un(e) parmi :

- une dernière tâche arrivée dans une file d'attente de tâches,
- un calcul des valeurs de retard de redistribution pour des tâches en file d'attente et une comparaison des valeurs de retard de redistribution avec des valeurs de laxisme des tâches en file d'attente,
- un calcul des valeurs de retard de redistribution pour des tâches en file d'attente et une détermination d'un temps de début respectif, en tenant compte des valeurs de retard de redistribution, au niveau d'un processeur quelconque et une comparaison de ces temps de début, et un suivi de la détermination des critères de sélection de retour ;

- de renvoyer une tâche à la fonction de programmation globale de tâches selon les critères de sélection de retour.

6. Procédé de l'une des revendications 1 à 5, comprenant, dans une fonction de programmation locale de tâches, le fait :

- de vérifier si le laxisme de programme est inférieur à zéro et, si c'est le cas .
- de calculer une heure d'expiration qui est le point temporel auquel une tâche en cours d'exécution doit s'arrêter afin que le laxisme de programme soit égal à zéro,
- d'interrompre la tâche en cours d'exécution, l'interruption ayant lieu à un intervalle de temps non nul avant l'heure d'expiration,
- de renvoyer la tâche interrompue à la fonction de programmation globale de tâches,
- d'activer une tâche en file d'attente, et
- de recalculer le laxisme de programme.

7. Procédé de la revendication 6, où l'intervalle de temps non nul est déterminé :

- en calculant le laxisme de la tâche en cours d'exécution,
- en calculant un laxisme d'hypothèse pour chaque tâche en file d'attente, comme étant la différence entre un temps d'achèvement prévu et un délai de fin par rapport à un point temporel de début commun supposé,
- en identifiant le plus petit laxisme d'hypothèse parmi les tâches en file d'attente,
- en réglant l'intervalle de temps non nul, dans le cas où le laxisme de la tâche en cours d'exécution est supérieur au plus petit laxisme d'hypothèse identifié, à une première valeur d'intervalle de temporisation, et sinon :

    - en réglant l'intervalle de temps non nul à une deuxième valeur d'intervalle de temporisation, la deuxième valeur d'intervalle de temporisation étant plus longue que la première valeur d'intervalle de temporisation.

8. Procédé de la revendication 6, où l'intervalle de temps non nul est déterminé :

- en calculant le laxisme de la tâche en cours d'exécution,
- en calculant un laxisme d'hypothèse pour chaque tâche en file d'attente, comme étant la différence entre un temps d'achèvement prévu et un délai de fin par rapport à un point temporel de début commun supposé,
- en identifiant le plus petit laxisme d'hypothèse parmi les tâches en file d'attente,
- en réglant l'intervalle de temps non nul à une valeur qui est proportionnelle à la différence entre le laxisme de la tâche en cours d'exécution et le plus petit laxisme d'hypothèse et inversement proportionnelle à la somme du laxisme de la tâche en cours d'exécution et du plus petit laxisme d'hypothèse.

9. Procédé de l'une des revendications 6 à 8, comprenant, dans une fonction de programmation locale de tâches, le fait :

- de recevoir une demande de rappel de tâches à partir de la fonction de programmation globale de tâches,
- d'estimer si des tâches en file d'attente peuvent respecter leurs délais de fin respectifs en tenant compte d'un retard quelconque causé en sauvegardant et en restaurant des données associées à une reprogrammation entre des processeurs, et, en fonction de l'estimation :
- de renvoyer une tâche à la fonction de programmation globale de tâches.

10. Procédé de l'une des revendications 1 à 5, comprenant, dans une fonction de programmation locale de tâches, le fait :

- de vérifier si le laxisme de programme est inférieur à zéro et, si c'est le cas :
- de calculer une heure d'expiration qui est le point temporel auquel une tâche en cours d'exécution doit s'arrêter afin que le laxisme de programme soit égal à zéro,
- de calculer un laxisme de programme d'hypothèse compte tenu de l'hypothèse selon laquelle la tâche en cours d'exécution est reprogrammée,
- d'interrompre, si le laxisme de programme d'hypothèse calculé est positif, la tâche en cours d'exécution à un intervalle de temps non nul avant l'heure d'expiration, et sinon d'interrompre la tâche en cours d'exécution immédiatement,
- d'activer une tâche en file d'attente, et
- de recalculer le laxisme de programme.

11. Procédé de l'une des revendications 1 à 10, comprenant, dans une fonction de programmation locale de tâches, le fait :

- d'attribuer un niveau de priorité à chaque tâche,

de maintenir une pluralité de files d'attente de tâches, chaque file d'attente contenant des tâches ayant un seul niveau de priorité, et

- de maintenir, dans la fonction de programmation globale de tâches, des informations d'état mis à jour concernant la pluralité de files d'attente.

12. Procédé de l'une des revendications 1 à 11, dans lequel la fonction de programmation globale de tâches est associée à un processeur spécifique.

13. Procédé de l'une des revendications 1 à 11, dans lequel la fonction de programmation globale de tâches est associée à une pluralité de processeurs.

14. Procédé de l'une des revendications 1 à 13, dans lequel le maintien d'informations d'état mis à jour comprend le fait :

- de maintenir une liste de processeurs triés par ordre de points temporels croissants où il est prévu que les processeurs seraient inactifs, et
- de maintenir une liste de processeurs triés par ordre de laxisme décroissant.

15. Procédé de la revendication 14, dans lequel le maintien des informations d'état mis à jour comprend en outre le fait :

- de maintenir une liste FIFO (First In-First Out) de processeurs inactifs.

16. Programme informatique comprenant des instructions logicielles qui, lorsqu'elles sont exécutées dans un dispositif de traitement multiprocesseur, met en oeuvre le procédé de l'une des revendications 1 à 15.

17. Dispositif de traitement multiprocesseur (100, 200, 300) comprenant des moyens de traitement et de mémoire (108, 208, 301, 303, 305) qui sont configurés de sorte qu'il soit en mesure de mettre en oeuvre le procédé de l'une des revendications 1 à 15.

18. Dispositif de communication mobile (300) comprenant le dispositif de traitement multiprocesseur de la revendication 17.

*Fig. 1*

*Fig. 2*

*Fig. 3*

401 CHECK, RECEIVE

NO

403 OK?

YES

A — 405 IDLE? — YES — 407 ASSIGN 1

NO

409 CALCU- LATE

411 L>D?

NO                    YES

413 ASSIGN 2        ASSIGN 3 415

417 ACKNOW- LEDGE

419 REMOVE

*Fig. 4A*

*Fig. 4B*

**Fig. 5**

**Fig. 6**

**Fig. 7A**

*Fig. 7B*

*Fig. 7C*

Fig. 8A

Fig. 8B

## Fig. 8C

```
   ┌──────────────┐
   │  RESCHEDULE  │
   │   TIMEOUT    │
   └──────┬───────┘
          │      841
   ┌──────┴───────┐
   │    DEAC-     │
   │   TIVATE     │
   └──────┬───────┘
          │      843
   ┌──────┴───────┐
   │   ACTIVATE   │
   └──────┬───────┘
          │      845
   ┌──────┴───────┐
   │  CALCULATE   │
   └──────┬───────┘
          │   847          849
        ◇─┴─◇          ┌─────────┐
        │L<0?│───Y────│  TIMER  │
        ◇───◇          └────┬────┘
          │ N                │
          ├──────────────────┘
   ┌──────┴───────┐
   │   RETURN     │  851
   │    JOB       │
   └──────┬───────┘
          │
   ┌──────┴───────┐
   │     END      │
   └──────────────┘
```

*Fig. 8C*

## Fig. 8D

```
   ┌──────────────┐
   │  JOB FINISH  │
   └──────┬───────┘
          │
   861    │
   ┌──────┴───────┐
   │   REMOVE     │
   └──────┬───────┘
          │             865
   863  ◇─┴─◇       ┌──────────┐
      │ N>0? │──Y──│ ACTIVATE │
        ◇───◇       └────┬─────┘
          │ N            │
     867  ├──────────────┘
   ┌──────┴───────┐
   │  CALCULATE   │
   └──────┬───────┘
          │             871
   869  ◇─┴─◇       ┌──────────┐
      │ L<0? │──Y──│  TIMER   │
        ◇───◇       └────┬─────┘
          │ N            │
     873  ├──────────────┘
   ┌──────┴───────┐
   │   RETURN     │
   │    JOB       │
   └──────┬───────┘
          │
   ┌──────┴───────┐
   │     END      │
   └──────────────┘
```

*Fig. 8D*

Fig. 8E

**EP 2 256 632 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070220517 A

**Non-patent literature cited in the description**

- Dynamic Scheduling of Parallel Jobs with QoS Demands in Multiclusters and Grids. **LIGANG HE et al.** GRID COMPUTING, 2004. PROCEEDINGS. FIFTH IEEE. ACM INTERNATIONAL WORKSHOP ON PITTSBURGH, 08 November 2004, 402-409

- **YUE, J.** Global Backfilling Scheduling in Multiclusters. *LECTURE NOTES IN COMPUTER SCIENCE LNCS3285,* 2004, 232-239